# EUROPEAN PATENT SPECIFICATION

(11) **EP 2 901 039 B1**
(45) Date of publication and mention of the grant of the patent: **26.10.2022**
(21) Application number: 13783259.8
(22) Date of filing: 25.09.2013
(51) Int. Cl.: F16F 9/49

(54) **SHOCK ABSORBER HAVING HYDRAULIC DAMPING MECHANISM**
STOSSDÄMPFER MIT EINEM HYDRAULISCHEN DÄMPFUNGSMECHANISMUS
AMORTISSEUR COMPORTANT UN MÉCANISME D'AMORTISSEMENT HYDRAULIQUE

(30) Priority: 26.09.2012 TR 201210959
(43) Date of publication of application: 05.08.2015
(73) Proprietor: Maysan Mando Otomotiv Parc. San. Ve Tic. A.S., Bursa (TR)
(72) Inventor: SARACALIOGLU, Erkan, Bursa (TR); YILMAZ, Saffet, Bursa (TR); ULU, Erdem, Bursa (TR)
(74) Representative: Kaya, Erdem
(86) International application number: PCT/EP2013/069975
(87) International publication number: WO 2014/048993

(56) References cited:
- EP-A1- 1 717 478
- US-A1- 2006 054 435

## Description

### TECHNICAL FIELD

The present invention relates to a shock absorber having a hydraulic damping mechanism.

### PRIOR ART

Today, motorized vehicles comprise elements which are designed using different methods in order to meet user requirements like comfort, driving comfort and safety. Among these elements, shock absorbers are important elements. The hardness levels of shock absorbers are effective in road holding of vehicles, in providing driving comfort and in preventing transfer of the deteriorations on the road to vehicles. If the shock absorbers are hard, the road holding and handling of the vehicle is increasing, however the comfort of the vehicle decreases. Particularly, in sport vehicles, since the vehicle is close to ground, the shock absorbers should response in short stroke distances. Because of this response requirement, pluralities of hydraulic damping mechanisms are added into shock absorbers.

An application of the hydraulic damping mechanism is given in the patent application WO 2004/040164. As can be seen in the application, the shaft, which is in connection to the piston arm entering into a body, presses the lubricant inside the body and a damping is provided. The staged passages, provided in the body, provide the lubricant to pass between the shaft and the body in a lesser manner in each stage. However, because of the complex structures of the shaft and of the body used, there occurs a structure whose production is difficult and whose cost is high.

Document EP 1717478 A1 is seen as the closest prior art and discloses the preamble of claim 1.

As a result, because of the abovementioned problems, an improvement is required in the related technical field.

### BRIEF DESCRIPTION OF THE INVENTION

The present invention relates to a shock absorber with a hydraulic damping mechanism, in order to eliminate the abovementioned problems and to bring new advantages to the related technical field.

The main object of the present invention is to provide a shock absorber which may give response in short stroke distances.

Another object of the present invention is to provide a shock absorber whose hardness level can be adjusted according to the structure of the vehicle.

In order to realize the abovementioned objects and the objects to be obtained from the detailed description below, the present invention is a shock absorber having a hollow cylindrical liner; a shaft which is in connection to a piston arm providing a press condition by advancing from one end of said liner towards the other end thereof and providing a vacuum condition in the return thereof; and a hydraulic damping mechanism having a body wherein said shaft enters and which is provided in the liner. Accordingly, said shock absorber is characterized by comprising a connection element which is provided at the end of said shaft and having a head part with a width so as to protrude from the shaft lateral surface; and a hollow cylindrical piston which is embodied so as to move between said head part and a protrusion, which is provided on the shaft, in said press and vacuum conditions and having a difference between the inner diameter of the piston and the outer diameter of the shaft so as to define a lubricant passage path.

In a preferred embodiment of the present invention, the piston comprises at least one channel which provides lubricant passage between the shaft and the piston.

In another preferred embodiment of the present invention, the piston comprises at least one inner stage, to which the connection element will seat, on the connection element side.

In another preferred embodiment of the present invention, the piston comprises at least one outer stage so as to define a lubricant passage path in the space existing between the outer diameter of the piston and the inner diameter of the body.

In another preferred embodiment of the present invention, the liner is embodied as an upper piece and as a bottom piece and the body comprises at least one protrusion which is positioned between said upper piece and said bottom piece.

In another preferred embodiment of the present invention, said protrusion comprises at least one hole which provides lubricant passage between the first region and the third region.

In another preferred embodiment of the present invention, the body comprises at least one lateral hole which provides lubricant passage between the second region and the third region.

### BRIEF DESCRIPTION OF THE FIGURES

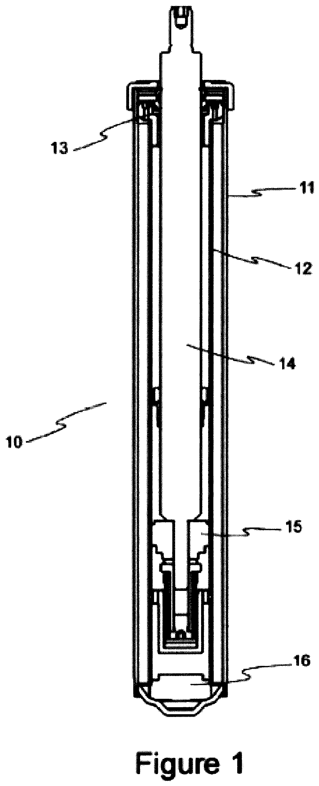

In Figure 1, a general view of the shock absorber having hydraulic damping mechanism is given.
In Figure 2, the detailed view of the hydraulic mechanism in press condition (a) is given.
In Figure 3, the detailed view of the hydraulic mechanism in vacuum condition (b) is given.

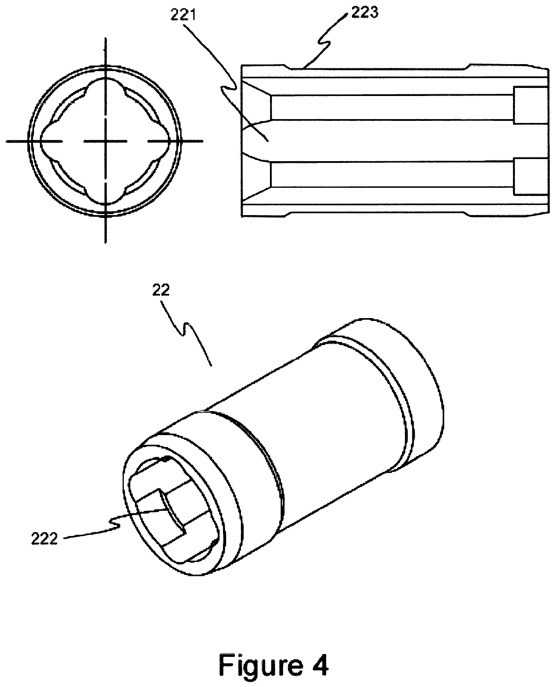

In Figure 4, the general and detailed views of the piston are given.

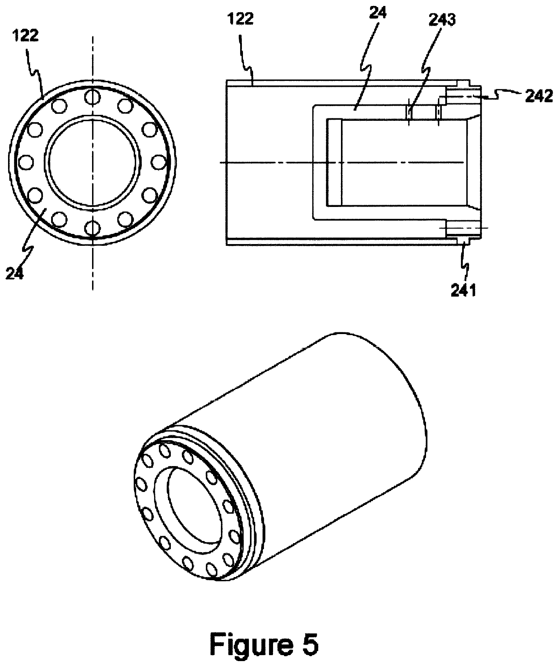

In Figure 5, the general and detailed views of the body are given.

### REFERENCE NUMBERS

10 Shock absorber
   11 External Liner
   12 Liner
      121 Upper Piece
      122 Bottom Piece
   13 Sealing Element
   14 Piston Arm
   15 Valve
   16 Base Valve
20 Hydraulic Damping Mechanism
   21 Shaft
      212 Protrusion
      213 Shaft Lateral Surface
   22 Piston
      221 Channel
      222 Inner Stage
      223 External Stage
   23 Connection Element
      231 Head Part
   24 Body
      241 Protrusion
      242 Hole
      243 Lateral Hole

### DETAILED DESCRIPTION OF THE INVENTION

In this detailed description, the subject matter shock absorber having hydraulic damping mechanism is explained with references to examples without forming any restrictive effect in order to make the subject more understandable.

The subject matter shock absorber (10) comprises an external liner (11); a cylindrical liner (12); a piston arm (14) which is provided in said liner (12) and which enters from one end of the liner (12) and which moves towards the other end thereof; a valve (15) provided on said piston arm (14); a base valve (16) provided at the other end of the liner (12); and a sealing element (13) provided at the side where the piston arm enters. Besides said items, said shock absorber (10) also comprises a hydraulic dampener (20); a shaft (21) provided at the end of the piston arm (14); a piston (22) which moves on said shaft (21) at a certain stroke connected to a connection element (23) on said shaft (21); and a body (24) wherein said piston (24) enters into and exits from by means of the movement of the piston arm (14). A thread is formed in the shaft (21) and it is provided in the form of a cylinder which is embodied so as to form a protrusion (21) at one side thereof. At the same time, the shaft (21) functions as an assembly element of the valve (15) provided on the piston arm (14). Said connection element (23) is embodied so as to comprise a head part (231) which will protrude from the shaft lateral surface (213). The piston (22) is embodied in the form of a cylinder which has channels (221) which will form a space between the shaft (21) and the piston (22) and which has an inner diameter providing movement thereof on the shaft (21). On the side of the piston (22) facing the connection element (23), an inner stage (222) is embodied in the inner part where said head part (231) will be seated. Said body (24) is provided in the form of a cup which has a protrusion (241) at the inlet part and which is embodied so that the outer diameter thereof is smaller than the inner diameter of the liner (12) and so that the inner diameter thereof will permit lubricant flow between the piston (22) and the body (24). By means of the diameter and number of the lateral holes (243) provided on the lateral side of the body, the hardness level of the hydraulic damping mechanism can be changed. In order for the body (24) to be provided inside the liner (12), the liner (12) is separated into an upper piece (121) and a bottom piece (122) from a region close to the base valve (16), and it is positioned between said bottom piece (122) and said upper piece (121) from said protrusion (241) provided on the body (24) so that the body inlet part will face the piston (22). Moreover, on the protrusion (241), holes (242) are provided which will permit the passage of the lubricant inside the liner (12) between the first region (I) and the third region (III).

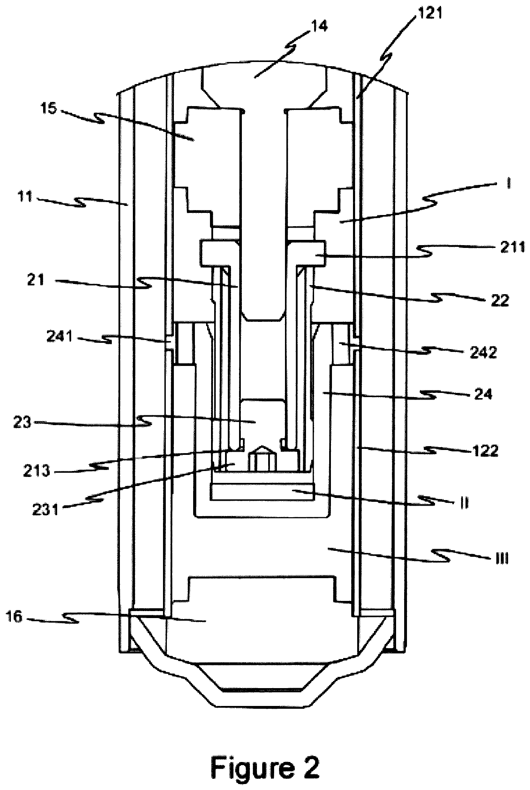

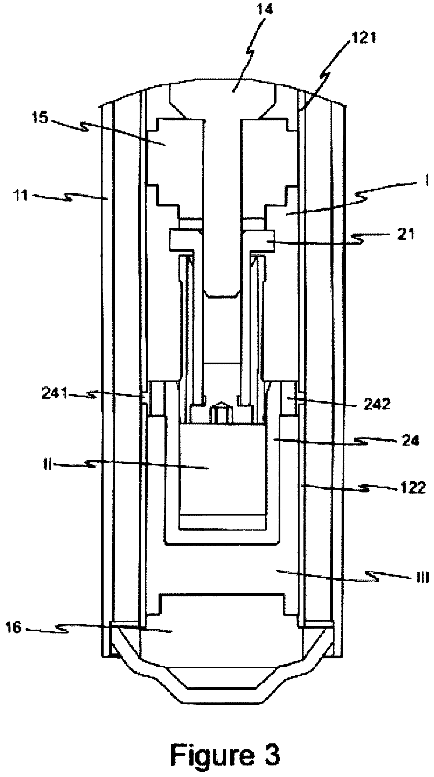

During the operation of the shock absorber (10), there occurs a press condition (a) illustrated in Figure 2 as the piston arm (14) is directed towards the base valve (16) inside the liner (12) and there occurs a vacuum condition (b) illustrated in Figure 3 as the piston arm (14) is diverged from the base valve (16). In said press condition (a), when the piston (22) begins entering into the body (24), the lubricant inside the body (24) forms a resistance and it tries to move from the second region (II) towards the first region (I). By means of said resistance, the piston (22) seats onto said protrusion (211) on the shaft (21). Thus, in press condition (a), the lubricant passage through said channels (221) between the shaft (21) and the piston (22) is prevented. In the press condition (a), the lubricant passage is realized from the second region (II) to the first region (I) by means of an outer stage (223) provided on the piston (22) and from the second region (II) to the third region (III) through the lateral holes (243) provided on the body. As the piston arm (14) passes to the vacuum condition (b), the piston (22) tries to remove from the body (24) and it forms a vacuum effect inside the body (24). By means of said vacuum effect, the piston (22) moves towards the connection element (23) on the shaft (21) and it clears the way for the channels (221) provided inside the piston (22). By means of this movement, lubricant passes from the first region (I) to the second region (II) by means of the channels (221) and lubricant passes from the third region (III) to the second region (II) by means of the lateral holes (243) on the body (24).

The protection scope of the present invention is set forth in the annexed Claims .

## Claims

1. A shock absorber (10) having a hollow cylindrical liner (12); a shaft (21) which is in connection to a piston arm (14) providing a press condition (a) by advancing from one end of said liner (12) towards the other end thereof and providing a vacuum condition (b) in the return of the piston arm (14); a connection element (23) which is provided at the end of said shaft (21) and having a head part (231) with a width so as to protrude from the shaft lateral surface (213); and a hollow cylindrical piston (22) which is embodied so as to move between said head part (231) and a protrusion (211), which is provided on the shaft (21), in said press (a) and vacuum (b) conditions and having a difference between the inner diameter of the piston (22) and the outer diameter of the shaft (21) so as to define a lubricant passage path, and a hydraulic damping mechanism (20) having a body (24) wherein said shaft (21) enters and which is provided in the liner (12), **characterized in that** the liner (12) is embodied as an upper piece (121) and as a bottom piece (122) and the body (24) comprises at least one protrusion (241) which is positioned between said upper piece (121) and said bottom piece (122); and wherein said protrusion (241) comprises at least one hole (242) which provides lubricant passage between a first region (I), defined on the side of the protrusion (241) where the piston arm (14) is provided, and a third region (III) which is on the other side of the protrusion (241).

2. A shock absorber (10) with a hydraulic damping mechanism (20) according to Claim 1, **characterized in that** the piston (22) comprises at least one channel (221) which provides lubricant passage between the shaft (21) and the piston (22).

3. A shock absorber (10) with a hydraulic damping mechanism (20) according to any one of the preceding claims, **characterized in that** the piston (22) comprises at least one inner stage (222), to which the connection element (23) will seat, on the connection element (23) side.

4. A shock absorber (10) with a hydraulic damping mechanism (20) according to any one of the preceding claims, **characterized in that** the piston (22) comprises at least one outer stage (223) so as to define a lubricant passage path in the space existing between the outer diameter of the piston (22) and the inner diameter of the body (24).

5. A shock absorber (10) with a hydraulic damping mechanism (20) according to Claim 1, **characterized in that** the body (24) comprises at least one lateral hole (243) which provides lubricant passage between a second region (II), defined inside of the body (24), and the third region (III).

## Patentansprüche

1. Stoßdämpfer (10) mit einer hohlzylindrischen Auskleidung (12); einem Schaft (21), der mit einem Kolbenarm (14) verbunden ist, der einen Druckzustand (a) herstellt, indem er sich von einem Ende der Auskleidung (12) zum anderen Ende derselben vorschiebt und einen Vakuumzustand (b) im Rücklauf des Kolbenarms (14) herstellt; einem Verbindungselement (23), das am Ende des Schafts (21) vorgesehen ist und einen Kopfteil (231) aufweist, der so breit ist, dass er über die Seitenfläche (213) des Schafts hinausragt; und einem hohlen zylindrischen Kolben (22), der so ausgebildet ist, dass er sich zwischen dem Kopfteil (231) und einem Vorsprung (211), der auf dem Schaft (21) vorgesehen ist, in den Druck- (a) und Vakuum- (b) Zuständen bewegt und eine Differenz zwischen dem Innendurchmesser des Kolbens (22) und dem Außendurchmesser des Schafts (21) aufweist, um einen Schmiermitteldurchgangsweg zu definieren, und einen hydraulischen Dämpfungsmechanismus (20) mit einem Körper (24), in den der Schaft (21) eintritt und der in der Auskleidung (12) vorgesehen ist, **dadurch gekennzeichnet, dass** die Auskleidung (12) als ein oberes Teil (121) und als ein unteres Teil (122) ausgebildet ist und der Körper (24) mindestens einen Vorsprung (241) umfasst, der zwischen dem oberen Teil (121) und dem unteren Teil (122) angeordnet ist; und wobei der Vorsprung (241) mindestens ein Loch (242) umfasst, das einen Schmiermitteldurchgang zwischen einem ersten Bereich (I), der auf der Seite des Vorsprungs (241) definiert ist, auf der der Kolbenarm (14) vorgesehen ist, und einem dritten Bereich (III), der sich auf der anderen Seite des Vorsprungs (241) befindet, ermöglicht.

2. Stoßdämpfer (10) mit einem hydraulischen Dämpfungsmechanismus (20) nach Anspruch 1, **dadurch gekennzeichnet, dass** der Kolben (22) mindestens einen Kanal (221) umfasst, der einen Schmiermitteldurchgang zwischen dem Schaft (21) und dem Kolben (22) ermöglicht.

3. Stoßdämpfer (10) mit einem hydraulischen Dämpfungsmechanismus (20) nach einem der vorangegangenen Ansprüche, **dadurch gekennzeichnet, dass** der Kolben (22) auf der Seite des Anschlusselements (23) mindestens eine innere Stufe (222) umfasst, an der das Anschlusselement (23) anliegen wird.

4. Stoßdämpfer (10) mit einem hydraulischen Dämpfungsmechanismus (20) nach einem der vorangegangenen Ansprüche, **dadurch gekennzeichnet, dass** der Kolben (22) mindestens eine äußere Stufe (223) aufweist, so dass ein Schmiermittelpfad in dem Raum zwischen dem Außendurchmesser des Kolbens (22) und dem Innendurchmesser des Körpers (24) definiert wird.

5. Stoßdämpfer (10) mit einem hydraulischen Dämpfungsmechanismus (20) nach Anspruch 1, **dadurch gekennzeichnet, dass** der Körper (24) mindestens ein seitliches Loch (243) umfasst, das einen Schmiermitteldurchgang zwischen einem zweiten Bereich (II), der innerhalb des Körpers (24) definiert ist, und dem dritten Bereich (III) ermöglicht.

## Revendications

1. Amortisseur (10) ayant une chemise cylindrique creuse (12) ; un arbre (21) qui est en connexion avec un bras de piston (14) fournissant une condition de pression (a) en avançant d'une extrémité de ladite chemise (12) vers l'autre extrémité de celle-ci et fournissant une condition de vide (b) dans le retour du bras de piston (14) ; un élément de connexion (23) qui est prévu à l'extrémité dudit arbre (21) et ayant une partie de tête (231) avec une largeur telle qu'elle fait saillie de la surface latérale de l'arbre (213) ; et un piston cylindrique creux (22) qui est réalisé de manière à se déplacer entre ladite partie de tête (231) et une saillie (211), qui est prévue sur l'arbre (21), dans lesdites conditions de pression (a) et de vide (b) et ayant une différence entre le diamètre intérieur du piston (22) et le diamètre extérieur de l'arbre (21) de manière à définir un chemin de passage de lubrifiant, et un mécanisme d'atténuation hydraulique (20) ayant un corps (24) dans lequel ledit arbre (21) entre et qui est prévu dans la chemise (12), **caractérisé en ce que** la chemise (12) est réalisée comme une pièce supérieure (121) et comme une pièce inférieure (122) et le corps (24) comprend au moins une saillie (241) qui est positionnée entre ladite pièce supérieure (121) et ladite pièce inférieure (122) ; et dans lequel ladite saillie (241) comprend au moins un trou (242) qui fournit un passage de lubrifiant entre une première région (I), définie sur le côté de la saillie (241) où le bras de piston (14) est prévu, et une troisième région (III) qui est sur l'autre côté de la saillie (241).

2. Amortisseur (10) avec un mécanisme d'atténuation hydraulique (20) selon la revendication 1, **caractérisé en ce que** le piston (22) comprend au moins un canal (221) qui fournit un passage de lubrifiant entre l'arbre (21) et le piston (22).

3. Amortisseur (10) avec un mécanisme d'atténuation hydraulique (20) selon l'une quelconque des revendications précédentes, **caractérisé en ce que** le piston (22) comprend au moins un étage intérieur (222), sur lequel l'élément de connexion (23) viendra se loger, du côté de l'élément de connexion (23).

4. Amortisseur (10) avec un mécanisme d'atténuation hydraulique (20) selon l'une quelconque des revendications précédentes, **caractérisé en ce que** le piston (22) comprend au moins un étage extérieur (223) de manière à définir un chemin de passage de lubrifiant dans l'espace existant entre le diamètre extérieur du piston (22) et le diamètre intérieur du corps (24).

5. Amortisseur (10) avec un mécanisme d'atténuation hydraulique (20) selon la revendication 1, **caractérisé en ce que** le corps (24) comprend au moins un trou latéral (243) qui fournit un passage de lubrifiant entre une deuxième région (II), définie à l'intérieur du corps (24), et la troisième région (III).
